# EUROPEAN PATENT APPLICATION

(11) **EP 1 886 886 A2**
(43) Date of publication of application: **13.02.2008**
(21) Application number: 07253124.7
(22) Date of filing: 09.08.2007
(51) Int. Cl.: B60T 7/06, B60T 11/18

(54) **Pedal position adjustment structure**

(30) Priority: 09.08.2006 JP 2006216386
(71) Applicant: Toyota Jidosha Kabushiki Kaisha, Toyota-shi, Aichi-ken 471-8571 (JP)
(72) Inventor: Kaino, Takeshi, Toyota-shi Aichi-ken 471- 8571 (JP)
(74) Representative: Albutt, Anthony John

(57) **Abstract**

A pedal position adjustment unit (8) is mounted on a pedal lever (22) of a clutch pedal. The pedal position adjustment unit (8) includes an engagement arm (82). When a locking ring (83) is located at a released position, the engagement arm is at an open position. When the locking ring (83) is located at a locked position, the engagement arm is at an engaged position. A spring (84) applies a force to the locking ring (83) to impel the locking ring (83) toward the locked position. With the locking ring (83) locked at the released position, a position of the clutch pedal is adjusted relative to the push rod (33). The locking ring (83) is released and moved to the locked position to lead the engagement arm (82) to the engaged position at which the engagement arm (82) engages the outer peripheral surface of the push rod (33).

## Description

### BACKGROUND OF THE INVENTION

### 1. Field of the Invention

The present invention relates to a structure for adjusting the position of a pedal, in particular an automobile clutch pedal. Furthermore, the present invention relates to an approach to improve the efficiency of adjusting the pedal position.

### 2. Description of the Related Art

Generally, an automobile with a manual transmission has a clutch actuation system for engaging or disengaging a clutch disposed between the engine and the transmission. One example is described in JP-A-2005-265042 to be described below. The clutch actuation system includes a clutch pedal, a clutch master cylinder, a clutch release cylinder, and a release fork. When the driver depresses the clutch pedal, hydraulic pressure is produced in the clutch master cylinder. The hydraulic pressure is transmitted through an oil path to the clutch release cylinder. This actuates the release fork to move a pressure plate in a direction away from a flywheel on the engine side. Thus, a transmission input shaft disengages from the flywheel.

This type of clutch actuation system has a push rod extending within the clutch master cylinder from a piston toward the vehicle compartment. The clutch pedal connects to the push rod via a position adjustment mechanism that will be discussed later. Thus, a force that the driver depresses the clutch pedal is transmitted to the piston via the push rod so that the piston moves. This produces hydraulic pressure in the clutch master cylinder.

The position adjustment mechanism is provided between the clutch pedal and the push rod to adjust the relative connecting positions of the clutch pedal and the push rod (the position of the clutch pedal relative to the push rod to which the clutch pedal is connected).

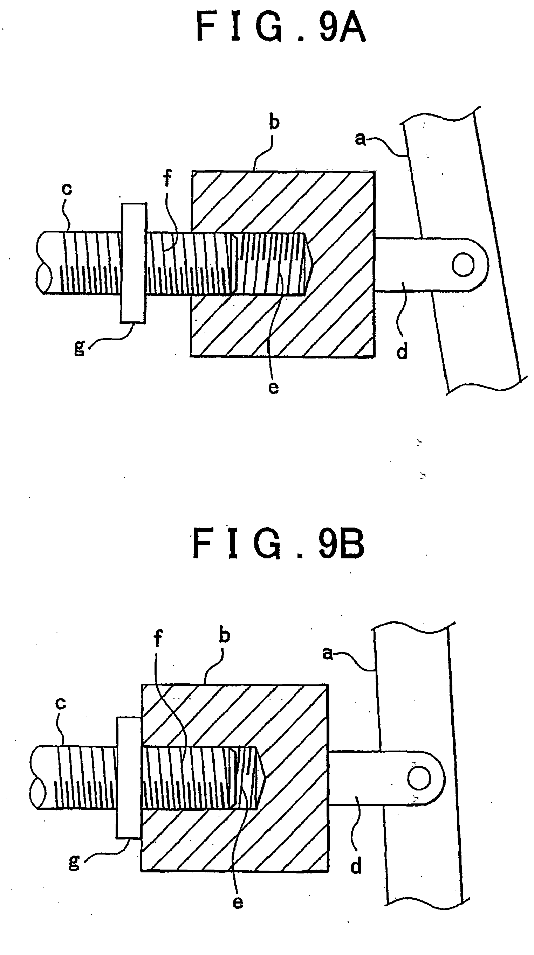

FIGs. 9A and 9B are schematic views of a typical position adjustment mechanism in the related art. As shown in FIGs. 9A and 9B, a clutch pedal (a) connects to a push rod (c) via a clevis (b). More specifically, a bracket (d) is provided on one end side of the clevis (b) (on the side of the clutch pedal (a)) to support the clutch pedal (a), while a recess is formed on the other end side of the clevis (b) (on the side of the push rod (c)). A female screw (e) is formed in the recess. The push rod (c) has an outer peripheral male screw (f). A lock nut (g) is fitted over the male screw (f) in advance.

The position of the clutch pedal (a) is adjusted as follows. As shown in FIG 9A, a distal end of the push rod (c) is screwed into the female screw (e) of the clevis (b). Then, the push rod (c) is rotated to adjust the position of the push rod (c) relative to the clevis (b) (the position of the push rod (c) screwed into the female screw (e) of the clevis (b)). The position of the clutch pedal (a) varies depending on the position of the push rod (c) screwed into the clevis (b).

The clutch pedal (a) is adjusted in place by checking its position. As shown in FIG 9B, the lock nut (g) is rotated to reach a position where the lock nut (g) abuts the end surface of the clevis (b). Thereby, the position of the push rod (c) is fixed relative to the clevis (b). This allows the relative positions of the clutch pedal (a) and the push rod (c) to be adjusted appropriately.

The following describes the necessity for adjusting the relative connecting positions of the clutch pedal (a) and the push rod (c).

For example, it is assumed that such position adjustment results in an excessively short distance between the clutch pedal (a) and the clutch master cylinder (an excessively large screw-in length of the push rod (c) relative to the clevis (b)). This causes the clutch pedal (a) to be placed in a lower position (near the dash panel) for a driver to depress the clutch pedal (a) to release the clutch. The driver therefore has deteriorated shift feel at the start of the vehicle. In an extreme case, the clutch is not fully released, causing problems, such as so-called gear noise upon shift changes and abnormal wear of a synchro-mechanism.

In contrast, it is assumed that such position adjustment results in an excessively long distance between the clutch pedal (a) and the clutch master cylinder (an excessively small screw-in length of the push rod (c) relative to the clevis (b)). This causes the clutch pedal (a) to be placed in a higher position (away from the dash panel) for a driver to depress the clutch pedal (a) to release the clutch. Therefore, the driver also has deteriorated shift feel at the start of the vehicle. In addition, there is another problem of a time lag between acceleration and clutch engagement. This makes it difficult to perform clutch engagement at an appropriate engine speed, which can result in less smooth gearshift or abnormal wear of the clutch disk.

Other than those problems, in the event the push rod (c) and the clutch pedal (a) are not adjusted in position, it may cause a port of a reservoir tank of the clutch master cylinder to be blocked, so that air is less easily bled from a clutch hydraulic pipe. Especially, if the clutch has a power-assist mechanism to reduce driver's effort of depressing, such air stuck in the pipe, it inhibits the power assist from working with constant pedal displacement. This provides deteriorated shift feel.

As has been described above, it is critical to properly adjust the relative connecting positions of the clutch pedal (a) and the push rod (c). The adjustment of the pedal position in the described manner largely depends on machining precision of components of the position adjustment mechanism as well as on assembly precision of the components to be assembled to the vehicle body. Therefore, after or upon assembling the components to the vehicle body, the aforementioned position adjustment has to be performed. Particularly, in the case of the related-art position adjustment mechanism, a worker needs to alternately rotate the push rod (c) and check the clutch pedal position several times in a very narrow clearance between the dash panel and the clutch pedal (a) in order to adjust the relative connecting positions of the push rod (c) and the clevis (b). This adversely affects the efficiency of the work, making it a time-consuming task.

Therefore, first the push rod (c) and the clevis (b) are subjected to the position adjustment on the sub-line (prior to the process of assembling the unit including these components to the vehicle body). Then, this unit is assembled to the vehicle body. This procedure improves the work efficiency. However, if the unit is not assembled to the vehicle body with sufficient precision, the same problems may occur as in the case where the push rod (c) and the clutch pedal (a) are not adjusted in place. That is, prior high-precision position adjustment on the sub-line alone may not solve these problems, including solid shift feel. For example, the position of the clutch pedal (a) to be mounted on the clutch pedal bracket as well as the position of the push rod (c) relative to the clevis (b) mounted on the clutch pedal (a) are adjusted very precisely, but nonetheless, without high-precision dash panel configuration and high-precision assembly of the clutch pedal bracket and the clutch master cylinder to the dash panel, the aforementioned problems are difficult to overcome.

### SUMMARY OF THE INVENTION

The present invention provides a pedal position adjustment structure for adjusting a pedal position with high precision and improved efficiency.

In accordance with one aspect of the invention, the pedal position is adjusted by moving the pedal to a position where the pedal and a push rod face each other. Then, a pedal-side member (an engagement member of a pedal position adjustment unit, which will be discussed later) engages an outer peripheral surface of the push rod. The pedal position is adjusted with such a simple process.

More specifically, one aspect of the invention is directed to a pedal position adjustment structure that adjusts the position of a pedal relative to a push rod to which the pedal is connected, the push rod being supported to freely extend or retract. In the pedal position adjustment structure, a pedal position adjustment unit is mounted on the pedal. The pedal position adjustment unit includes an engagement member, a locking member, a locking member retaining mechanism, and an impelling member. The engagement member may be displaced between an open position, at which the engagement member is moved away from the outer peripheral surface of the push rod, and an engaged position, at which the engagement member engages an outer peripheral surface of the push rod. The locking member is movable between a released position to lead the engagement member to the open position and a locked position to hold the engagement member at the engaged position. The locking member retaining mechanism is designed to hold the locking member at the released position. The impelling member is designed to impel the locking member toward the locked position. Furthermore, the locked position may be a forward position , and the released position may be a backward position.

According to the aspect of the invention, in order to adjust the position of the pedal relative to the push rod to which the pedal is connected, first the locking member is located at the released position where the engagement member is at the open position. Then, the locking member retaining mechanism holds the locking member at this released position. Under this condition, with no need for a worker to hold the engagement member and the locking member, the engagement member is maintained at the open position so that the pedal may be freely displaced relative to the push rod. Then, in order to adjust the position of the pedal, the pedal is rotated to an appropriate position relative to the push rod. The locking member retaining mechanism then releases the locking member. The impelling member applies a force to impel the locking member toward the locked position in advance. Therefore, as the locking member retaining mechanism releases the locking member, the locking member moves toward the locked position with the aide of the impelling force of the impelling member. When reaching the locked position, the locking member presses the engagement member toward the outer peripheral surface of the push rod. This leads the engagement member to the engaged position to engage the outer peripheral surface of the push rod. This engagement member is maintained at the engaged position. Thus, the push rod and the engagement member engage each other in an integral manner, while being not movable relatively to each other. Consequently, the pedal is maintained at a suitable position relative to the push rod.

As described above, in accordance with the aspect of the invention, the pedal is adjusted to a suitable position with a very simple process. This process only involves moving the pedal to a proper position relative to the push rod, and releasing the locking member from the locking member retaining mechanism. This enables the pedal position to be adjusted with high precision and improved efficiency.

The components of the pedal position adjustment unit may be specified as follows. The engagement member may be constituted by plural engagement arms. Each engagement arm is mounted on an outer peripheral surface of a rod connected to the pedal. The engagement arm has plural engagement claws formed on a surface thereof opposed to the outer peripheral surface of the push rod. The locking member may be a locking ring fitted over the rod. The locking ring may be disposed movably between the released position adjacent to a proximal end of the engagement arm and the locked position adjacent to a distal end of the engagement arm. The rod may be provided with an outer circumferential flange that protrudes outward from the rod. A coil spring as the impelling member is interposed between the outer circumferential flange and the locking ring.

The specific description of the components of the pedal position adjustment unit is intended to improve the practical use of the pedal position adjustment structure according to the aspect of the invention. The plural engagement claws are formed on the engagement arm as the engagement member to engage the outer peripheral surface of the push rod. This ensures that the engagement arm and the push rod are prevented from displacing relative to each other. Accordingly, the pedal is prevented from displacing relative to the push rod.

The locking member retaining mechanism may be specified as a locking pin. The locking pin protrudes from the outer peripheral surface of the rod connected to the pedal. The locking pin locks the locking ring located at the released position, thereby retaining the locking ring at the released position.

Therefore, there is no need for a worker to hold the locking ring at the released position. This improves efficiency in adjusting the pedal position by moving the pedal. Engaging the engagement member with the outer peripheral surface of the push rod may only involve releasing the locking ring from the locking pin. This simplifies the process of displacing the engagement member from the open position to the engaged position.

The engagement member may be provided with a stopper. When the locking member reaches the locked position, a forward end surface of the locking member abuts the stopper. This avoids a situation where the locking member comes off the pedal position adjustment unit, undesirably leading the engagement member to the open position. Also, the stopper helps stabilize the engagement member at the engaged position, providing improved reliability of the pedal position adjustment structure.

According to the aspect of the invention, displacing the locking member allows to regulate the position of the engagement member that is engageable with the outer peripheral surface of the push rod. When the locking member moves to the locked position with the aid of the impelling force of the impelling member, the engagement member is led to the engaged position to engage the outer peripheral surface of the push rod. Therefore, the pedal is adjusted to a proper position with a simple process. Thus, pedal position adjustment is achieved with high precision as well as improved efficiency.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic perspective view illustrating a construction of a clutch actuation system according to one embodiment of the invention;
FIG. 2 is a side view of a pedal position adjustment unit and a push rod when engagement arms are open;
FIG. 3 is a sectional view taken along the line III-III in FIG. 2;
FIG. 4 is a sectional view taken along the line IV-IV in FIG 2;
FIG. 5 is a side view of the pedal position adjustment unit and the push rod when the engagement arms are brought into engagement;
FIG. 6 is a sectional view taken along the line VI-VI in FIG 5;
FIG. 7 is a side view of the pedal position adjustment unit and the push rod when the engagement arms are open in a first modification;
FIGs. 8A and 8B are side views of a support portion for the engagement arm according to a second modification, in which FIG. 8A shows that the engagement arm is open, while FIG 8B shows that the engagement arm is brought into engagement; and
FIGs. 9A and 9B illustrate a pedal position adjustment mechanism in the related art, in which FIG 9A is a sectional view of the pedal position adjustment mechanism in the process to adjust the pedal position, while FIG. 9B is a sectional view of the pedal position adjustment mechanism after the pedal position has been adjusted.

### DETAILED DESCRIPTION OF EXAMPLE EMBODIMENTS

One embodiment of the invention will be described below with reference to the drawings. In this embodiment, the invention as a position adjustment structure is applied to a clutch pedal of an automobile with a manual transmission.

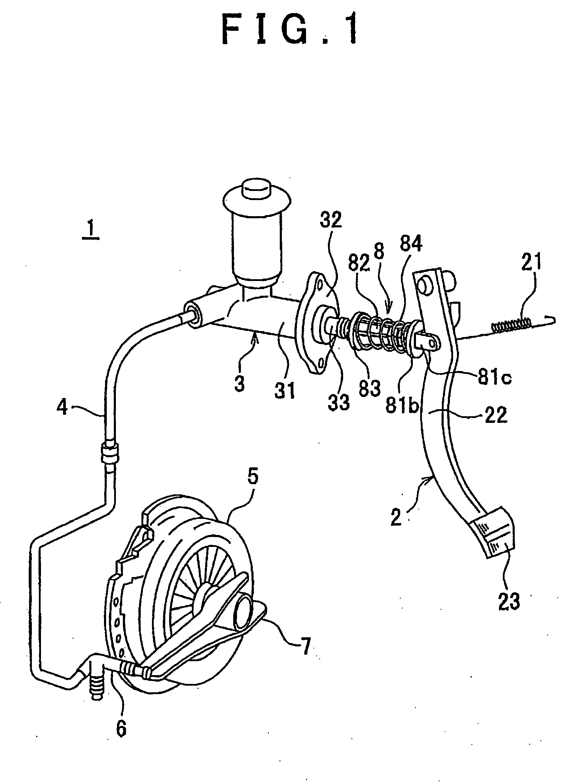

FIG 1 is a schematic perspective view illustrating a construction of a clutch actuation system 1 according to the embodiment of the invention. As shown in FIG. 1, the clutch actuation system 1 has a clutch pedal 2, a pedal return spring 21, a master cylinder 3, a flexible hose 4, a clutch cover 5, a release cylinder 6, and a clutch release fork 7.

The clutch pedal 2 includes a pedal lever 22 and a pedal plate 23 that serves as the depression portion provided at the bottom end of the pedal lever 22. The pedal lever 22 and the pedal plate 23 may be formed as a single piece. A dash panel separates a vehicle compartment from an engine compartment. A clutch pedal bracket (not shown) is mounted on the dash panel to support the pedal lever 22 at a point near its upper end, such that the pedal 2 is rotatable about a horizontal axis. The pedal return spring 21 impels the pedal lever 22 to rotate the clutch pedal 2 toward the driver. The driver depresses the pedal plate 23 against the impelling force in order to disengage (release) the clutch. The clutch release action will be discussed later.

The master cylinder 3 includes a master cylinder body 31 having a built-in piston and other components (not shown) therein. When the master cylinder body 31 receives a force that the driver depresses the clutch pedal 2, the piston moves within the master cylinder body 31, producing hydraulic pressure. The master cylinder body 31 has a flange 32 at the end closer to the vehicle compartment, the flange 32 being provided around an outer periphery of the master cylinder body 31. The master cylinder 3 may be affixed to the vehicle body by bolting the flange 32 to the dash panel.

Hydraulic pressure produced in the master cylinder 3 is transmitted to the release cylinder 6 through the flexible hose 4. The master cylinder 3 pressure-feeds fluid through the flexible hose 4 to the release cylinder 6, so that the release cylinder 6 is subjected to hydraulic pressure. The hydraulic pressure actuates the clutch release fork 7 to disengage the clutch cover 5 from a clutch disk (not shown). In this manner, the clutch release action is completed.

The piston is accommodated in the master cylinder body 31. The end surface of the piston that is closer to the vehicle compartment is connected to one end of a push rod 33. The other end of the push rod 33, which is closer to the vehicle compartment, is connected to the pedal lever 22 around the longitudinal middle point through a pedal position adjustment unit 8. The pedal position adjustment unit 8 will be discussed later. In other words, the force of depressing the pedal is transmitted from the middle point of the pedal lever 22 to the push rod 33, thereby producing hydraulic pressure in the master cylinder body 31.

A characteristic of the embodiment of the invention or the pedal position adjustment unit 8 will now be described. The pedal position adjustment unit 8 is designed to adjust the position of the clutch pedal 2 relative to the push rod 33 to which the clutch pedal 2 is connected. As described above, the pedal position adjustment unit 8 is located between the pedal lever 22 of the clutch pedal 2 and the push rod 33. The pedal position adjustment unit 8 has the function of adjusting the position of the clutch pedal 2 and the function of transmitting a rotational force (pedal depressing force) of the clutch pedal 2 to the push rod 33.

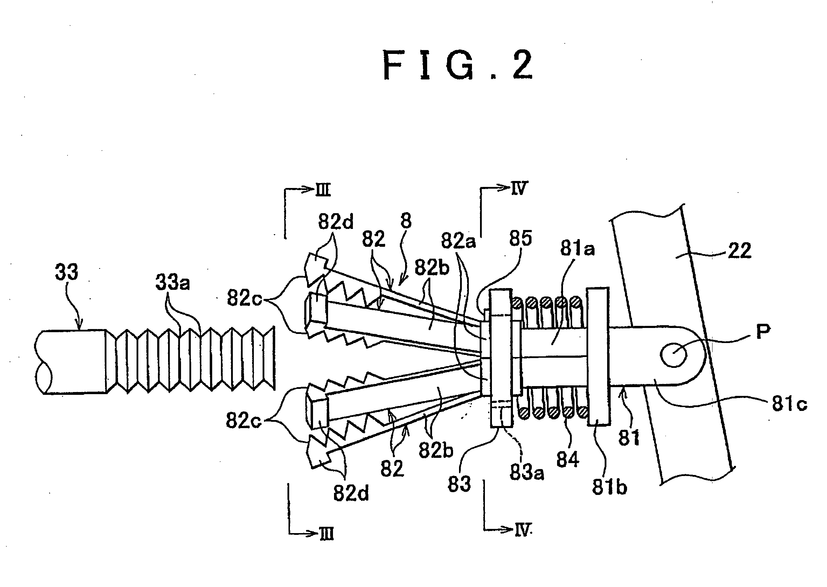

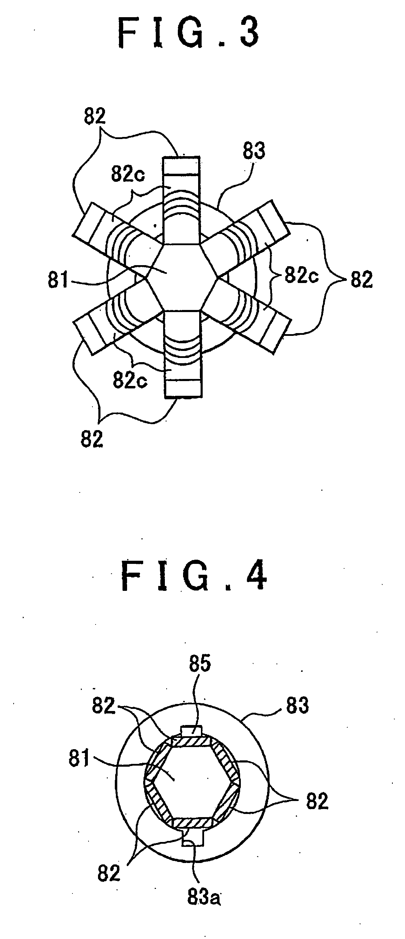

FIG. 2 is a side view of the pedal position adjustment unit 8 and the push rod 33 when engagement arms 82 are disengaged. The engagement arms 82 will be discussed later. FIG 3 is a sectional view taken along the line III-III in FIG 2. FIG 4 is a sectional view taken along the line IV-IV in FIG 2.

As shown in FIGs. 2 to 4, the pedal position adjustment unit 8 includes a rod 81, the plurality of engagement arms (engagement member) 82, a locking ring (locking member) 83, and a coil spring (impelling member) 84. The rod 81 is connected to the pedal lever 22 of the clutch pedal 2. The engagement arms 82 engage the push rod 33. The locking ring 83 regulates the position of the engagement arms 82. The coil spring 84 applies an impelling force to the locking ring 83. The following describes the respective members.

The rod 81 includes a generally hexagonal rod body 81a and a disk-shaped flange 81b on the side of the rod body 81a that is closer to the vehicle compartment (on the right side in FIG 2). The rod body 81a and the flange 81b may be formed as one piece. In addition, two lever support brackets 81c and 81c extend from the end surface of the flange 81b closer to the vehicle compartment, while facing each other in the horizontal direction and are parallel with each other. The pedal lever 22 is inserted into the space between the lever support brackets 81c. A through hole is formed in each lever support bracket 81c and the pedal lever 22, through which a pin P is inserted. This allows the rod 81 to be supported rotatably relative to the pedal lever 22 around its middle point.

The engagement arms 82 are integrally joined to an outer peripheral surface or six sides of the rod 81 at a location near the distal end of the rod 81 (the end closer to the engine compartment) by means of welding or other means.

As previously mentioned, these engagement arms 82 engage the outer peripheral surface of the push rod 33. Each engagement arm 82 includes a joint section 82a and an engagement section 82b. The joint section 82a is fitted over and joined to the outer peripheral surface of the rod 81. The engagement section 82b extends from the joint section 82a toward the distal end of the rod 81 (on the left side in FIG. 2). The engagement section 82b is angled slightly outward from the joint section 82a. Thus, when no external force acts on the engagement arms 82, the engagement sections 82b are oriented to be progressively away from the axis of the rod 81 toward their distal ends (left side in FIG 2) such that an inner space defined by the engagement sections 82b is more opened toward their distal ends.

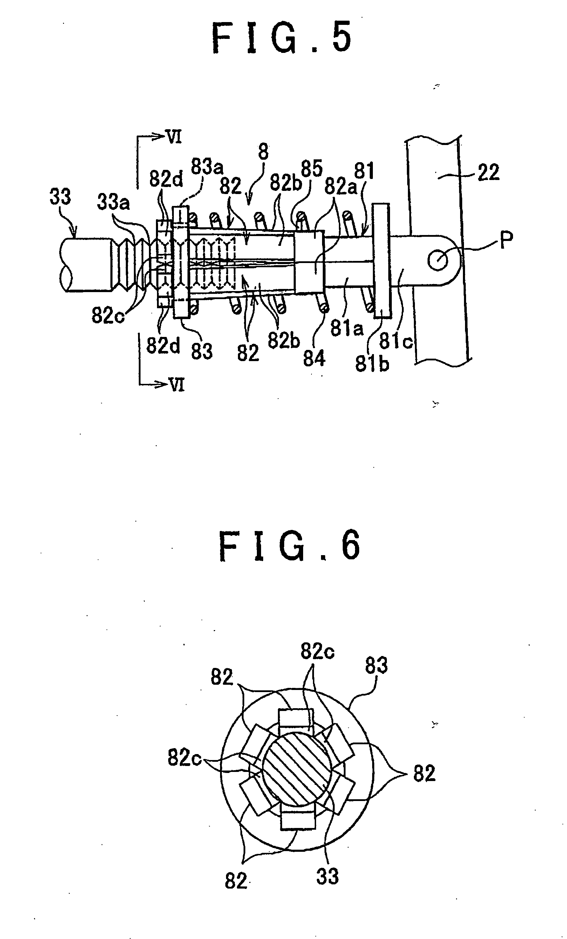

Each engagement arm 82 also has a plurality of engagement claws 82c (four claws in this embodiment) on an inner surface of the engagement section 82b or on a surface opposed to the outer peripheral surface of the push rod 33. These engagement claws 82c are arranged in the longitudinal direction of the engagement section 82b in an integral manner. The push rod 33 has a plurality of outer circumferential annular grooves 33a (eight grooves in this embodiment) arranged in the longitudinal direction of the push rod 33. Each groove is formed into a shape that complements the shape of the engagement claw 82c. When the pedal position adjustment unit 8 connects to the push rod 33, the engagement claw 82c of the engagement arm 82 is fitted into the corresponding groove 33a of the push rod 33. In FIG. 5, the engagement claw 82c of the engagement arm 82 is fitted into the groove 33a of the push rod 33. FIG 6 is a sectional view taken along the line VI-VI in FIG. 5. Because the push rod 33 has a cylindrical shape, an edge line of the tip end of each engagement claw 82c is curved (forming an arched recess) to complement the bottom shape of each groove 33a.

The number of the engagement claws 82c of the engagement arm 82 and the number of the grooves 33a of the push rod 33 are not limited to the aforementioned numbers. Any number of those elements may be provided.

As shown in FIG. 2, when the pedal position adjustment unit 8 is not connected to the push rod 33, the engagement sections 82b are oriented to be progressively away from the axis of the rod 81 toward their distal ends (such that an inner space defined by the engagement sections 82b is more open toward their distal ends), as described above. In this case, the engagement arms 82 are configured such that a distance between the engagement claws 82c and the engagement claws 82c of the oppositely facing engagement arms 82 in the radial direction of the rod 81 is larger than an outer diameter of the push rod 33. This prevents the distal end of the push rod 33 from interfering with the engagement claws 82c and 82c in the process of pedal position adjustment. The process of pedal position adjustment will be discussed later.

The engagement arms 82 include integrally-formed stoppers 82d. Each stopper 82d protrudes from the outer surface of the engagement arm 82 at its distal end in the longitudinal direction, generally forming a cube. As will be discussed later, when the locking ring 83 moves to a locked position, the front end surface of the locking ring 83 abuts the stopper 82d. Thereby, the stopper 82d prevents the locking ring 83 from coming off (see FIG 5).

The locking ring 83 is a ring-shaped member. As shown in FIG. 2, in the initial condition, the locking ring 83 is held in position where the locking ring 83 is located on the outer peripheral surface of the rod body 81a of the rod 81 as well as on the outer peripheral surface of the joint section 82a of the engagement arm 82. Thus, the inner diameter of the locking ring 83 is slightly larger than the sum of the outer diameter of the rod body 81a and twice the thickness of the joint section 82a, such that the locking ring 83 encloses the rod body 81a of the rod 81 and the joint section 82a of the engagement arm 82.

The coil spring 84 is interposed between the locking ring 83 and the flange 81b of the rod 81 in a compressed state. An impelling force toward the distal end of the engagement arm 82 is constantly applied to the locking ring 83.

The joint section 82a of one of the engagement arms 82 (i.e., the upper engagement arm 82 in FIG 2) includes an integrally-formed locking pin 85 (locking member retaining mechanism). The locking pin 85 protrudes from the outer surface of the joint section 82a. The locking pin 85 restricts the position of the locking ring 83. In other words, when the locking pin 85 restricts the position of the locking ring 83, the locking ring 83 is held in position (released position), despite the impelling force of the coil spring 84. Thus, the locking ring 83 is located on the outer peripheral surface of the rod body 81 a of the rod 81 as well as on the outer peripheral surface of the joint section 82a of the engagement arm 82.

The locking ring 83 has a groove 83a on a part of its inner peripheral surface. The groove 83a is formed into a shape approximately identical to, or a shape slightly larger than, the shape of the locking pin 85 (when viewed in the axial direction of the rod 81). As shown in FIG 4, when the locking ring 83 is held at the released position, the groove 83a is at a location apart from the locking pin 85, for example, the location where the groove 83a and the locking pin 85 are opposed to each other at an angle of 180 degrees in the circumferential direction. In this condition, the end surface of the locking ring 83 abuts the locking pin 85, thereby holding the locking ring 83 at the released position. In contrast, when the locking ring 83 is rotated by an angle of 180 degrees, the groove 83a meets the locking pin 85. The locking pin 85 no longer restricts the position of the locking ring 83, allowing the locking ring 83 to move forward with the aid of the impelling force of the coil spring 84.

The pedal position adjustment by means of the pedal position adjustment unit 8 thus constructed will now be described.

The pedal position adjustment is performed with the master cylinder 3 mounted on the dash panel by bolting the flange 32 thereto and with the pedal position adjustment unit 8 mounted on the pedal lever 22 of the clutch pedal 2 around the middle point of the lever 22. The pedal lever 22 is rotatably supported at a point near the upper end thereof by the clutch pedal bracket.

Under this condition, as shown in FIG. 2, the locking ring 83 is first located at the released position where the engagement arms 82 are open. The locking ring 83 at this released position is locked and retained by the locking pin 85. In this condition, with no need for a worker to hold the engagement arms 82 and the locking ring 83, the engagement arms 82 are kept open so that the clutch pedal 2 is freely displaceable relative to the push rod 33. The process of holding the locking ring 83 at the released position in such manner may be performed either after or prior to mounting the pedal position adjustment unit 8 to the pedal lever 22 of the clutch pedal 2.

Then, the position of the clutch pedal 2 is adjusted by rotating the clutch pedal 2 into the appropriate position relative to the push rod 3. For example, the clutch pedal 2 may be rotated concurrently while measuring the clearance between the bottom end of the clutch pedal 2 and the vehicle floor panel. When the clearance reaches a predetermined value, the clutch pedal 2 is held. Then, the locking ring 83 is released from the locking pin 85. To be more specific, the locking ring 83 is held in position and rotated about the axis of the rod 81 by an angle of 180 degrees so that the groove 83a meets the locking pin 85. Thus, the locking pin 85 no longer restricts the position of the locking ring 83. This allows the locking ring 83 to move from the released position to the locked position with the aid of the impelling force of the coil spring 84. When the locking ring 83 moves toward the locked position in this manner, the inner peripheral surface of the locking ring 83 contacts the outer sides of the engagement arms 82, which pushes the engagement sections 82b of the engagement arms 82 toward the push rod 33.

As shown in FIGS. 5 and 6, when in the locked position, the locking ring 83 presses the engagement sections 82b of the engagement arms 82 toward the outer peripheral surface of the push rod 33. This brings the engagement claws 82c of the engagement arms 82 into engagement with the grooves 33a provided on the outer peripheral surface of the push rod 33.

Under this condition, the locking ring 83 prevents the engagement sections 82b of the engagement arms 82 from becoming disengaged from the push rod 33. The locking ring 83 is also subjected to the impelling force of the coil spring 84 and kept at the locked position. Therefore, the engagement sections 82b of the engagement arms 82 remain engaged with the grooves 33a of the push rod 33. In other words, at this moment, the push rod 33 and the engagement arms 82 engage each other in an integral manner, such that they are not movable relative to each other. Consequently, the proper position of the clutch pedal 2 relative to the push rod 33 is maintained.

As described above, in the embodiment of the invention, the position of the clutch pedal 2 may be adjusted with a very simple process. This process only involves moving the clutch pedal 2 to a suitable position relative to the push rod 33, and rotating the locking ring 83 to release the locking ring 83 from the position restricted by the locking pin 85. Therefore, without performing the aforementioned position adjustment on the sub-line, the proper position adjustment for the clutch pedal 2 is easily achieved with high precision.

The first modification of the above embodiment of the invention will now be described. The first modification differs from the above embodiment with respect to the shape of the grooves 33a formed on the outer peripheral surface of the push rod 33 and the shape of the engagement claws 82c formed on the inner side of the engagement arm 82. Other than that, the first modification is substantially the same as the above embodiment. Thus, the description below will focus on the shapes of the grooves 33a and the shapes of the engagement claws 82c.

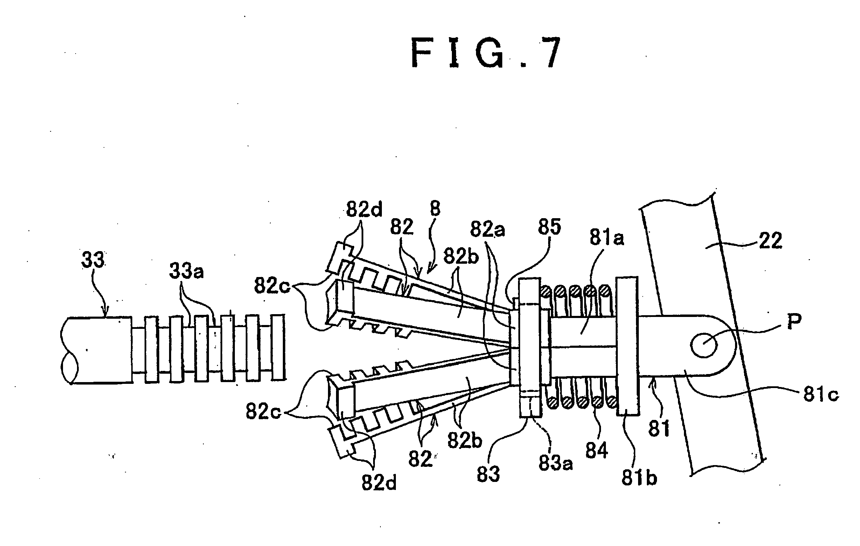

FIG 7 is a side view of the pedal position adjustment unit 8 and the push rod 33 when the engagement arms 82 are open in the first modification.

As shown in FIG. 7, the grooves 33a and the engagement claws 82c have a rectangular profile in the first modification, rather the triangular profile shown in the above embodiment. In other words, when the engagement claws 82c are fitted into the grooves 33a, flat surfaces of the engagement claws 82c and the grooves 33a, which extend perpendicular to the axial direction of the push rod 33 (outward from the axial direction), engage each other.

Thus, the surfaces of the engagement claws 82c and the grooves 33a, which extend perpendicular to the direction of a force of depressing the clutch pedal 2, engage each other. This allows more efficient transmission of the force of depressing the clutch pedal 2, resulting in a significantly improved response to the clutch release.

According to the first modification, in order to help the engagement claws 82ceasily fit into the grooves 33a, each groove 33a may have a guide surface at its open side (outer peripheral side) end, such that the guide surface provides a larger open area toward the outer periphery. Alternatively, each engagement claw 82c may have a tapered surface at its distal end.

The second modification of the above embodiment of the invention will now be described. The second modification differs from the above embodiment with respect to the structure that connects the engagement arms 82 to the rod 81. Other than that, the second modification is substantially the same as the above embodiment. Thus, the description hereinafter will focus on the structure that connects the engagement arms 82.

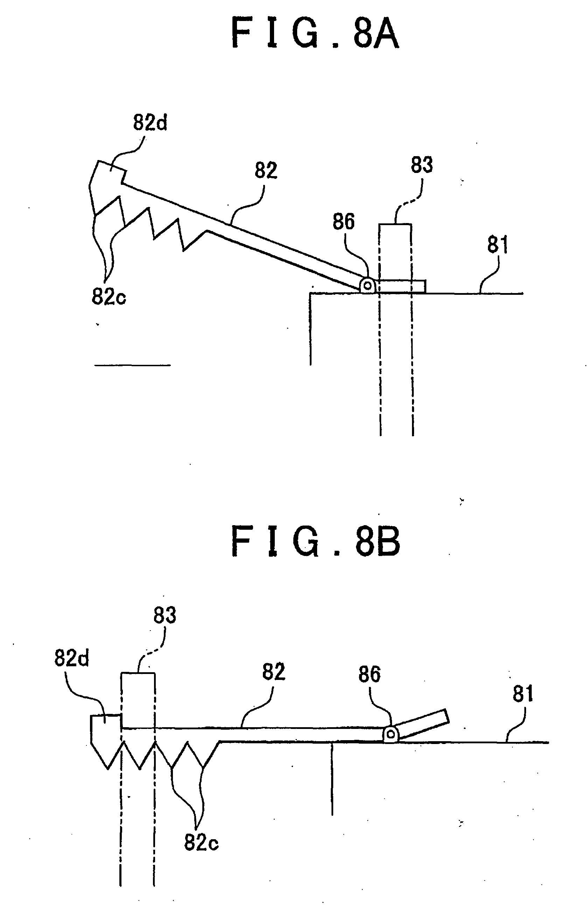

FIGs. 8A and 8B are side views of a support portion for the engagement arm 82 according to the second modification. FIG. 8A shows that the engagement arm 82 is open, while FIG. 8B shows that the engagement arm 82 is engaged. Although FIGs. 8A and 8B illustrate only one engagement arm 82 connected with the support structure, actually the other engagement arms 82 are also connected with this support structure.

In the second modification, as shown in FIGs. 8A and 8B, the engagement arm 82 is secured to the outer peripheral surface of the rod 81 with a hinge 86. The engagement arm 82 is thus connected pivotally about the axis of the hinge 86. According to the second modification, the locking ring 83 (see the phantom line) reaches the locked position with the aid of the impelling force of the coil spring 84 (not shown), which brings the engagement arm 82 into engagement. Under this condition, the engagement arm 82 is not elastically deformed. In contrast, in the above embodiment, the engagement sections 82b of the engagement arms 82, which are brought into engagement, are elastically deformed to their inner side. Thus, the second modification allows the engagement arms 82 to be brought into engagement in a more stable manner.

The above-described embodiment and modifications describe the case where the invention as the position adjustment structure is applied to the clutch pedal 2. The invention is not limited to that, but may also be applied to an accelerator pedal, a brake pedal or other pedals that requires position adjustment.

In the above-described embodiment and modifications, the locking pin 85 is used as a mechanism to hold the locking ring 83 at the released position. However, the invention is not limited to that. For example, a hook type engagement member may be hooked between the flange 81b of the rod 81 and the locking ring 83 located at the released position, thereby holding the locking ring 83 at the released position. After the clutch pedal 2 is adjusted in position, the hook type engagement member may be removed to release the locking ring 83. This allows the locking ring 83 to move to the locked position.

## Claims

1. A pedal position adjustment structure that adjusts the position of a pedal (2) relative to a push rod (33) to which the pedal is connected, the push rod being supported to freely extend or retract, the pedal position adjustment structure **characterized by** comprising:
a pedal position adjustment unit (8) mounted on the pedal, wherein the pedal position adjustment unit includes:
an engagement member (82) that is displaced between an open position, at which the engagement member is moved away from an outer peripheral surface of the push rod, and an engaged position, at which the engagement member engages the outer peripheral surface of the push rod;
a locking member (83) movable between a released position to lead the engagement member to the open position and a locked position to hold the engagement member at the engaged position;
a locking member retaining mechanism (85) that retains the locking member at the released position; and
an impelling member (84) that impels the locking member toward the locked position.

2. The pedal position adjustment structure according to claim 1, wherein the released position is a backward position, and the locked position is a forward position.

3. The pedal position adjustment structure according to claim 1 or 2, wherein
the engagement member is constituted by a plurality of engagement arms (82), each engagement arm being mounted on an outer peripheral surface of a rod (81) connected to the pedal, the engagement arm having a plurality of engagement claws formed on a surface of the engagement arm that faces the outer peripheral surface of the push rod;
the locking member is a locking ring (83) fitted over the rod, the locking ring being disposed movably between the released position adjacent to a proximal end of the engagement arm and the locked position adjacent to a distal end of the engagement arm; and
the rod is provided with an outer circumferential flange (81b) protruding from the rod, and a coil spring (84) as the impelling member is interposed between the outer circumferential flange and the locking ring.

4. The pedal position adjustment structure according to claim 3, wherein the locking member retaining mechanism is a locking pin (85) that protrudes from the outer peripheral surface of the rod connected to the pedal and locks the locking ring located at the released position, thereby retaining the locking ring at the released position.

5. The pedal position adjustment structure according to claim 3, wherein when the locking member moves to the locked position, the locking member contacts an outer side of the engagement member, and the locking member applies an impelling force toward an axis of the push rod to the engagement member in order to lead the engagement member to the engaged position.

6. The pedal position adjustment structure according to any one of claims 3 to 5, wherein the engagement member is integrally welded to the rod and is oriented to be progressively away from an axis of the rod toward a distal end of the engagement member.

7. The pedal position adjustment structure according to any one of claims 3 to 5, wherein the engagement member is mounted on the rod by a hinge (86) and supported rotatably about an axis of the hinge.

8. The pedal position adjustment structure according to any one of claims 3 to 7, wherein each engagement claw of the plurality of engagement claws is formed into a shape that complements the shape of an annular groove (33a) formed on the outer peripheral surface of the push rod.

9. The pedal position adjustment structure according to claim 8, wherein each engagement claw and the annular grooves have a triangular profile.

10. The pedal position adjustment structure according to claim 8, wherein each engagement claw and the annular grooves have a rectangular profile.

11. The pedal position adjustment structure according to any one of claims 1 to 10, wherein the engagement member is provided with a stopper (82d), and when the locking member reaches the locked position, the locking member abuts the stopper.
